# EUROPÄISCHE PATENTANMELDUNG

(11) **EP 4 523 888 A1**
(43) Veröffentlichungstag der Anmeldung: **19.03.2025**
(21) Anmeldenummer: 24199106.6
(22) Anmeldetag: 09.09.2024
(51) Int. Cl.: B29C 64/153, B29C 64/268, B29C 64/282, B33Y 10/00, B33Y 30/00

(54) **VERFAHREN UND VORRICHTUNG ZUR ADDITIVEN FERTIGUNG EINES BAUTEILS**

(30) Priorität: 12.09.2023 DE 102023208853
(71) Anmelder: Friedrich-Alexander-Universität Erlangen-Nürnberg, 91054 Erlangen (DE); Universität Duisburg-Essen, 45141 Essen (DE)
(72) Erfinder: Sommereyns, Alexander, 91080 Uttenreuth (DE); Leupold, Simon, 91052 Erlangen (DE); Schmidt, Michael, 91052 Erlangen (DE); Barcikowski, Stephan, 45141 Essen (DE); Ziefuß, Anna, 45141 Essen (DE); Willeke, Michael, 45141 Essen (DE)
(74) Vertreter: Rau, Schneck & Hübner Patentanwälte Rechtsanwälte PartGmbB

(57) **Zusammenfassung**

Es werden ein Verfahren und eine Vorrichtung zur additiven Fertigung eines Bauteils beschrieben. Eine Laseranordnung (10) zur Erzeugung von Laserstrahlen (S1) mit mindestens zwei unterschiedlichen Wellenlängen wird bereitgestellt. Ein thermoplastisches Baumaterialpulver (5) wird bereitgestellt, wobei das Baumaterialpulver (5) für die unterschiedlichen Wellenlängen der Laserstrahlen (S1) ein unterschiedliches Absorptionsverhalten zeigt. Mehrere Bauteilschichten (15, 16) werden erzeugt, wobei jeweils eine Pulverschicht des Baumaterialpulvers (5) aufgetragen wird und das Baumaterialpulver (5) in zu verfestigenden Bereichen der Pulverschicht mit Hilfe der Laserstrahlen (S1) aufgeschmolzen wird, und wobei die Laserstrahlen (S1) unterschiedlicher Wellenlängen selektiv auf die Pulverschichten eingestrahlt werden, um mit dem Baumaterialpulver (5) mit unterschiedlicher Eindringtiefe wechselzuwirken.

## Beschreibung

Der Inhalt der deutschen Patentanmeldung DE 10 2023 208 853.3 wird durch Bezugnahme hierin aufgenommen.

Die Erfindung betrifft ein Verfahren zur additiven Fertigung eines Bauteils. Die Erfindung betrifft weiterhin eine Vorrichtung für die additive Fertigung eines Bauteils.

Die additive Fertigung hat sich in vielen Anwendungs- und Fertigungsfeldem bewährt, insbesondere in der Prototypen-, Ersatzteil- und Einzelteilfertigung. Es besteht daher beständiger Bedarf, Verfahren und Vorrichtungen für die additive Fertigung zu verbessern.

Die Aufgabe der vorliegenden Erfindung besteht daher darin, Verfahren und Vorrichtungen für die additive Fertigung zu verbessern, insbesondere hinsichtlich deren Flexibilität und Effizienz sowie bevorzugt hinsichtlich der mechanischen Eigenschaften der zu fertigenden Bauteile.

Diese Aufgabe ist gelöst durch ein Verfahren zur additiven Fertigung eines Bauteils mit den im Anspruchs 1 angegeben Schritten. Diese Aufgabe ist weiterhin gelöst durch eine Vorrichtung für die additive Fertigung eines Bauteils gemäß Anspruch 11. Vorteilhafte Ausgestaltungen sind Gegenstand der Unteransprüche.

Das erfindungsgemäße Verfahren zur additiven Fertigung eines Bauteils weist die folgenden Schritte auf:
- Bereitstellen eine Laseranordnung zur Erzeugung von Laserstrahlen mit mindestens zwei unterschiedlichen Wellenlängen,
- Bereitstellen eines thermoplastischen Baumaterialpulvers, das für die unterschiedlichen Wellenlängen der Laserstrahlen ein unterschiedliches Absorptionsverhalten zeigt, und
- Erzeugen mehrerer Bauteilschichten, wobei jeweils eine Pulverschicht des Baumaterialpulvers aufgetragen wird und das Baumaterialpulver in zu verfestigenden Bereichen der Pulverschicht mit Hilfe der Laserstrahlen der Laseranordnung aufgeschmolzen wird, und wobei Laserstrahlen unterschiedlicher Wellenlängen selektiv auf die Pulverschichten eingestrahlt werden, um mit dem Baumaterialpulver mit unterschiedlicher Eindringtiefe wechselzuwirken.

Die Erfinder haben erkannt, dass ein wellenlängenabhängiges Absorptionsverhalten eines Baumaterialpulvers für die additive Fertigung genutzt werden kann, indem Laserstrahlen unterschiedlicher Wellenlängen genutzt werden. Aufgrund des unterschiedlichen Absorptionsverhaltens werden die Laserstrahlen verschiedener Wellenlänge unterschiedlich stark von dem Baumaterialpulver absorbiert. Dies resultiert insbesondere in unterschiedlichen Eindringtiefen der jeweiligen Laserstrahlen. Durch die Verwendung der Laserstrahlen unterschiedlicher Wellenlängen in Kombination mit einem Baumaterialpulver, das an diesen Wellenlängen ein unterschiedliches Absorptionsverhalten aufweist, kann daher eine Wechselwirkung der Laserstrahlen in unterschiedlichen Eindringtiefen der Pulverschichten bewirkt werden. Hierdurch kann das Baumaterialpulver insbesondere mit unterschiedlichen Eindringtiefen bearbeitet, insbesondere erwärmt und/oder aufgeschmolzen, werden. Abhängig von den jeweiligen Anforderungen können unterschiedliche Prozessstrategien angewandt werden, was zu einem effizienten, wirtschaftlichen und flexiblen Fertigungsverfahren führt.

Das thermoplastische Baumaterialpulver kann insbesondere ein thermoplastisches Polymerpulver sein. Bevorzugt kann das Baumaterialpulver ein Polymerpulver sein, das ein absorptionserhöhendes Additiv aufweist. Zur Verarbeitung von thermoplastischem Baumaterialpulvern, insbesondere thermoplastischen Polymerpulvern, bevorzugt mit absorptionserhöhenden Additiven, haben sich Laserstrahlen mit Wellenlängen im sichtbaren und/oder infraroten Wellenlängenbereich, insbesondere im sichtbaren und/oder nahinfraroten Bereich, als besonders geeignet erwiesen. Der sichtbare Wellenlängenbereich (auch als VIS bezeichnet) liegt insbesondere zwischen 380 nm und 780 nm. Der infrarote Wellenlängenbereich (auch als IR bezeichnet) liegt insbesondere zwischen 780 nm und 1 mm, insbesondere zwischen 780 nm und 50 µm. Der nahinfrarote Wellenlängenbereich (auch als NIR bezeichnet) liegt insbesondere zwischen 780 nm und 3.000 nm. Laserstrahlen dieser Wellenlänge ermöglichen ein zuverlässiges Erwärmen, insbesondere Aufschmelzen, des thermoplastischen Baumaterialpulvers, insbesondere bei geringer Laserleistung. Beispielsweise kann zum Erwärmen, insbesondere Aufschmelzen, eine Laserleistung zwischen 1 mW und 9 W genutzt werden. Hierdurch kann insbesondere ein Zersetzen des Baumaterialpulvers vermieden werden.

Die Eindringtiefen der Laserstrahlen unterschiedlicher Wellenlänge können sich insbesondere um mindestens eine Schichtdicke, bevorzugt um mindestens zwei Schichtdicken, besonders bevorzugt um mindestens drei Schichtdicken, der aufgebrachten Pulverschichten unterscheiden. Beispielsweise können sich die Eindringtiefen der Laserstrahlen zwischen einer und zehn, insbesondere zwischen zwei und fünf, Schichtdicken der Pulverschichten unterscheiden. Beispielsweise können Laserstrahlen einer ersten Wellenlänge eine Eindringtiefe zwischen zwei und vier, insbesondere von etwa zwei, Schichtdicken aufweisen. Laserstrahlen einer zweiten Wellenlänge können eine Eindringtiefe von mindestens drei Schichtdicken, insbesondere von mindestens vier, insbesondere zwischen vier und zehn, beispielsweise von etwa fünf, Schichtdicken haben

Zur Erzeugung der Bauteilschichten können unterschiedliche Verfahren der pulverbettbasierten additiven Fertigung verwendet werden. Beispielsweise können unterschiedliche Prozessstrategien für die Auftragung der Pulverschichten verwendet werden, insbesondere ein mechanischer Pulverauftrag, beispielsweise mittels einer Rakel, und/oder ein elektrofotografischer Pulverauftrag. Das Verfahren kann insbesondere ein pulverbettbasiertes Schmelzen (PBF) mittels Laserstrahl (-LB) an einem polymeren Werkstoff (/P) (Englisch: powder bed fusion of polymers using a laser beam; kurz: PBF-LB/P) sein.

Das Aufschmelzen des Baumaterialpulvers in den zu verfestigenden Bereichen erfolgt mit Hilfe der Laserstrahlen der Laseranordnung. Hierbei können Laserstrahlen einer oder mehrerer der mindestens zwei unterschiedlichen Wellenlängen verwendet werden. Es ist insbesondere möglich, die Laserstrahlen mehrerer oder unterschiedlicher der Wellenlängen der Laseranordnung zum Aufschmelzen des Baumaterialpulvers in unterschiedlichen oder überlappenden Bauteilbereichen zu verwenden. Zusätzlich oder alternativ hierzu können Laserstrahlen einer der mindestens zwei unterschiedlichen Wellenlängen zum Erwärmen des Baumaterialpulvers genutzt werden, ohne dieses aufzuschmelzen. Dies ermöglicht beispielsweise ein Vorwärmen und/oder ein kontrolliertes Abkühlverhalten aufgeschmolzener Pulverbereiche. Die Verwendung mindestens zweier unterschiedlicher Wellenlängen ermöglicht in vorteilhafter Weise die Kombination unterschiedlicher Fertigungsstrategien.

Der Pulverauftrag und das Aufschmelzen in den zu verfestigenden Bereichen können alternierend erfolgen. Insbesondere können zu verfestigende Bereiche einer jeden Pulverschicht aufgeschmolzen werden, bevor die nächste Pulverschicht aufgetragen wird. Es ist auch möglich, mehrere Pulverschichten aufzutragen und anschließend gemeinsam aufzuschmelzen, insbesondere wenn die zu verfestigenden Bereiche der Pulverschichten deckungsgleich sind. Es ist beispielsweise möglich, mehrere zuvor aufgetragene Pulverschichten auf einmal mit Laserstrahlen einer Wellenlänge mit hoher Eindringtiefe gemeinsam aufzuschmelzen. Es ist auch möglich, tieferliegende Pulverschichten mit Laserstrahlen hoher Eindringtiefe ein oder mehrmals nachzuschmelzen. Hierdurch kann der Schmelzgrad des Baumaterialpulvers erhöht werden. Beispielsweise kann das Pulver mit Laserstrahlen einer ersten Wellenlänge aufgeschmolzen werden mit einem ersten Schmelzgrad (beispielsweise von höchstens 96 %). Durch das Nachschmelzen, insbesondere mittels Laserstrahlen einer anderen Wellenlänge, die bevorzugt weniger absorbiert werden, kann ein höherer Schmelzgrad (beispielsweise über 96 %) erzielt werden. Durch die Erhöhung des Schmelzgrads kann beispielsweise die Bauteildichte lokal eingestellt, insbesondere erhöht werden. Das Nachschmelzen erfolgt insbesondere über mehrere Bauteilschichten hinweg, beispielsweise über mindestens drei, insbesondere über mindestens 5, Bauteilschichten.

Es ist auch möglich, unterschiedliche Pulverschichten mit unterschiedlicher Schichtdicke aufzutragen. So kann die Schichtdicke der aufgetragenen Pulverschichten insbesondere an die Eindringtiefe des zu verwendenden Lasers zum Aufschmelzen der jeweiligen Pulverschicht angepasst werden.

Die Laseranordnung ist dazu ausgebildet Laserstrahlen mit mindestens zwei unterschiedlichen Wellenlängen zu erzeugen. Die Wellenlängen unterscheiden sich insbesondere um mindestens 10 nm, insbesondere um mindestens 20 nm, insbesondere um mindestens 40 nm, beispielsweise um mindestens 100 nm.

Zur Erzeugung von Laserstrahlen unterschiedlicher Wellenlängen kann die Laseranordnung insbesondere je Wellenlänge mindestens einen Laser aufweisen. Beispielsweise kann die Laseranordnung mindestens zwei Laser aufweisen, deren Laserstrahlen unterschiedliche Wellenlängen haben. Die Laseranordnung kann auch mehr als zwei unterschiedliche Laser aufweisen. Alternativ oder zusätzlich kann die Laseranordnung mindestens eine Laserstrahlquelle zur Erzeugung von Laserstrahlen mit veränderbarer Wellenlänge aufweisen. Geeignete Laserstrahlquellen weisen beispielsweise einen Optical Parametric Amplifier (kurz: OPA) auf, mit dem die Wellenlänge von Laserstrahlung eines Lasers geändert werden kann. Beispielsweise kann die Laserstrahlung des Lasers selektiv durch einen OPA geleitet werden zur Änderung der Wellenlänge der Laserstrahlung. Es ist insbesondere möglich den Laserstrahl eines Lasers in zwei oder mehr Teilstrahlen aufzuteilen und mindestens einen der Teilstrahlen durch einen OPA zu leiten. Die Laseranordnung kann beispielsweise zur Erzeugung von Laserstrahlen mit mindestens zwei der folgenden Wellenlängen ausgelegt sein: 10,6 µm (beispielsweise mittels eines CO₂-Lasers), 1064 nm (beispielsweise mittels eines Nd:YAG-Lasers), 940 nm (beispielsweise mittels eines Diodenlasers), 808 nm (beispielsweise mittels eines Diodenlasers) und 445 nm (beispielsweise mittels eines Diodenlasers).

Die Laseranordnung kann eine oder mehrere Einstrahloptiken aufweisen, um Laserstrahlen der mindestens zwei unterschiedlichen Wellenlängen, insbesondere Laserstrahlen von mindestens zwei Lasern, gezielt auf jeweilige Bereiche der Pulverschichten einzustrahlen. Beispielsweise kann für jeden Laser eine Einstrahloptik vorgesehen sein. Dies ermöglicht insbesondere ein zeitlich paralleles Einstrahlen von Laserstrahlen unterschiedlicher Wellenlänge. Es ist auch möglich, eine gemeinsame Einstrahloptik für verschiedenen Laserstrahlen, insbesondere verschiedene Laser, der Laseranordnung vorzusehen. Die jeweiligen Laserstrahlen unterschiedlicher Wellenlänge, insbesondere unterschiedlicher Laser, können beispielsweise sequentiell auf die Pulverschichten eingestrahlt werden. Die Einstrahloptik kann beispielsweise ein Galvanometer-Scanner sein.

Zusätzlich oder alternativ zu der Einstrahloptik können eine oder mehrere Laserstrahlquellen der Laseranordnung, insbesondere mindestens zwei Laser der Laseranordnung, mittels eines Achssystems verlagerbar sein, insbesondere parallel zu den aufgetragenen Pulverschichten. Die Laseranordnung kann beispielsweise einen Laserplotter aufweisen.

Gemäß einem bevorzugten Aspekt des Verfahrens wird das Baumaterialpulver in unterschiedlichen Bauteilbereichen mit Laserstrahlen unterschiedlicher Wellenlänge, insbesondere mit Laserstrahlen verschiedener der Laser, der Laseranordnung aufgeschmolzen zur Erzeugung von Bauteilbereichen mit unterschiedlicher Schichtdicke der jeweiligen Bauteilschichten. Die Verwendung von Laserstrahlen verschiedener Wellenlängen zur Erzeugung unterschiedlicher Bauteilbereiche bewirkt ein Aufschmelzen des Baumaterialpulvers in den jeweiligen Bauteilbereichen mit unterschiedlicher Eindringtiefe der Laserstrahlen. Hierüber lässt sich die Schichtdicke der erzeugten Bauteilschichten flexibel anpassen, um insbesondere die Prozesszeit zu reduzieren. Vorteilhafterweise können höhere Schichtdicken mit einem Laser geringerer Absorption erzeugt werden, ohne dass das Material durch eine Erhöhung des Energieeintrags thermisch zersetzt wird. Unterschiedliche Bauteilbereiche können insbesondere unterschiedliche Bauteilschichten und/oder unterschiedliche Flächenbereiche einer Bauteilschicht sein.

Die Variation der Schichtdicken durch Verwendung von Laserstrahlen unterschiedlicher Wellenlängen für verschiedene Bauteilbereiche kann insbesondere zur Verringerung der Prozesszeit genutzt werden. Beispielsweise können Laserstrahlen einer Wellenlänge, die weniger von dem Baumaterialpulver absorbiert wird, für Bauteilbereiche eingesetzt werden, bei denen dickere Schichten geringerer Auflösung ausreichen. Bauteilbereiche, die eine feinere Auflösung erfordern, können mit Laserstrahlen einer Wellenlänge, die stärker von dem Baumaterialpulver absorbiert wird und damit eine geringere Eindringtiefe hat, erzeugt werden.

Bevorzugt kann eine Hülle des zu fertigenden Bauteils mit Laserstrahlen, die stärker von dem Baumaterial absorbiert werden, gefertigt werden, um im Bereich der Bauteiloberfläche eine hohe Auflösung zu erzielen. Innenbereiche des Bauteils können dann mit einem Laser höherer Eindringtiefe mit höheren Schichtdicken gefertigt werden. Die Laserstrahlen höherer Eindringtiefen können insbesondere auch zur Bearbeitung in tieferen Schichten, beispielsweise zum Erhöhen eines Schmelzgrads, genutzt werden.

Besonders bevorzugt kann das Aufschmelzen unterschiedlicher Pulverbereiche mit Laserstrahlen unterschiedlicher der mindestens zwei Wellenlängen kombiniert werden mit einem Pulverauftrag unterschiedlicher Schichtdicke, um die Schichtdicke des aufgetragenen Pulvers an die Schichtdicke der zu erzeugenden Bauteilschichten anzupassen. Hierdurch kann die Verfahrenseffizienz weiter erhöht werden.

Gemäß einem bevorzugten Aspekt des Verfahrens wird ein Temperaturverlauf in Aufbaurichtung mit Hilfe der Laserstrahlen mindestens einer der unterschiedlichen Wellenlängen der Laseranordnung, insbesondere mittels Laserstrahlen mindestens eines mehrerer Laser der Laseranordnung, gesteuert. Eine Steuerung des Temperaturverlaufs, insbesondere des Abkühlverhaltens, in Aufbaurichtung ermöglicht eine zeitliche, kinetische und/oder thermische Prozesskontrolle. Die Aufbaurichtung ist insbesondere parallel zur Flächennormalen der aufgetragenen Pulverschichten. Insbesondere kann eine der mindestens zwei unterschiedlichen Wellenlängen, die ein geringes Absorptionsverhalten zeigt, zur Erwärmung des insbesondere bereits einmal aufgeschmolzenen, Baumaterialpulvers mit hoher Eindringtiefe genutzt werden. Beispielsweise können mehrere Bauteilschichten, beispielsweise zwei, drei, oder mehr Bauteilschichten, erzeugt werden, insbesondere durch schichtweises Aufschmelzen, und anschließend mit Laserstrahlen entsprechend hoher Eindringtiefe erwärmt, insbesondere nachgeschmolzen, werden. Das Abkühlverhalten des Baumaterialpulvers kann gezielt eingestellt werden. Hierdurch kann die Dichte des zu erzeugenden Bauteils angepasst, insbesondere erhöht werden. Beispielsweise können innerhalb des Bauteils Stützstrukturen höherer Dichte als die umgebenen Bauteilbereiche erzeugt werden. Als Stützstrukturen können beispielsweise Stützpfeiler in Aufbaurichtung erzeugt werden. Das Verfahren eignet sich insbesondere zur Fertigung von Funktionsbauteilen, die hohen mechanischen Anforderungen genügen müssen.

Gemäß einem bevorzugten Aspekt des Verfahrens wird Sekundärstrahlung, die auf auf die Pulverschichten eingestrahlte Laserstrahlen mindestens einer der unterschiedlichen Wellenlängen der Laseranordnung, insbesondere mindestens eines der Laser der Laseranordnung, zurückgeht, detektiert zur Vermessung der aufgetragenen Pulverschichten. Die Vermessung der aufgetragenen Pulverschichten umfasst insbesondere eine Vermessung des aufgetragenen Baumaterials in Pulverform, in aufgeschmolzenem Zustand und/oder in verfestigtem Zustand. Insbesondere kann eine Vermessung von verfestigten Bereichen der Bauteilschichten erfolgen. Die Sekundärstrahlung ist insbesondere reflektierte, transmittierte und/oder reemittierte Strahlung der jeweiligen zur Vermessung genutzten Laserstrahlen. Die Laserstrahlen können beispielsweise mit Grenzflächen, insbesondere zwischen zwei Bauteilschichten, und/oder mit inneren Strukturen des Bauteils, beispielsweise Poren, wechselwirken, insbesondere daran reflektiert werden, und als reflektierte oder transmittierte Sekundärstrahlung austreten und detektiert werden. Die Sekundärstrahlung, insbesondere die reflektierten und/oder transmittierten Laserstrahlen, können direkt detektiert und als Messsignal genutzt werden. Es ist auch möglich, die Sekundärstrahlung vor oder bei deren Detektion mit einer Referenzstrahlung zu interferieren und ein resultierendes Interferenzmuster als Messsignal zu verwenden. Beispielsweise kann die Referenzstrahlung Laserstrahlen der gleichen Wellenlänge sein, die zur Vermessung der aufgetragenen Pulverschichten eingestrahlt wird. Beispielsweise können Laserstrahlen in einen auf die Pulverschichten einzustrahlenden Teilstrahl und einen die Referenzstrahlung bildenden Teilstrahl aufgeteilt werden. Es ist insbesondere möglich, die optische Kohärenz-Tomographie (OCT) zur Vermessung zu verwenden. Durch die Vermessung der Pulverschichten können Fehler, beispielsweise in dem aufgetragenen Pulver, in der Schmelze und/oder in verfestigten Bauteilbereichen in-situ analysiert werden. Beispielsweise kann die Qualität der erzeugten Bauteilbereiche überprüft werden, insbesondere auf Poren und/oder Schichtanbindungsfehler. Mögliche Fehler sind frühzeitig erkennbar. Besonders bevorzugt kann die Vermessung parallel zu der Fertigung mit Hilfe eines oder mehrerer weiterer Laser der Laseranordnung erfolgen. Dies ermöglicht es, auf mögliche Fertigungsfehler frühzeitig zu reagieren und diese, beispielsweise durch Nachschmelzen des Baumaterialpulvers zu beheben. Der Ausschuss an fehlerhaften Teilen ist verringert. Die Wirtschaftlichkeit des Verfahrens ist erhöht.

Bevorzugt werden Laserstrahlen für die Vermessung der aufgetragenen Pulverschichten, insbesondere von verfestigten Bereichen der Bauteilschichten, genutzt, deren Wellenlänge im Vergleich mit den anderen mittels der Laseranordnung erzeugbaren Wellenlängen am wenigsten von dem Baumaterialpulver absorbiert wird. Für die Wellenlänge der zur Vermessung genutzten Laserstrahlen weist das Baumaterialpulver insbesondere eine geringe Extinktion auf, beispielsweise eine Extinktion von weniger als 0,01. Die geringe Wechselwirkung bzw. Absorption der Laserstrahlung führt zu einer hohen Eindringtiefe, ohne dass eine nennenswerte Erwärmung oder ein Aufschmelzen des Baumaterialpulvers erfolgt. Dies ermöglicht eine Vermessung tieferliegender Pulverschichten, Schmelzebereiche und/oder Bauteilschichten. Beispielsweise kann die Vermessung über mindestens drei, insbesondere mindestens fünf, insbesondere mindestens zehn, Schichtdicken erfolgen. Die Eindringtiefe kann beispielsweise im Millimeterbereich liegen.

Für die zur Vermessung genutzten Laserstrahlen weisen das Baumaterialpulver, eine Schmelze hieraus und/oder verfestigte Bauteilbereiche bevorzugt Brechungsindexunterschiede auf, die eine ausreichende Wechselwirkung der Laserstrahlen mit inneren Strukturen des aufgetragenen Baumaterialpulvers, der Schmelze und/oder verfestigter Bauteilbereiche, beispielsweise mit eingeschlossenen Poren und/oder Grenzflächen, ermöglichen. Für die zur Vermessung genutzten Laserstrahlen weist das Baumaterialpulver insbesondere einen Reflexionsgrad von mindestens 10⁻¹⁰ auf. Ein derartiger Reflexionsgrad hat sich als ausreichend erwiesen, um innere Strukturen abbilden zu können. Geeignete Reflexionsgrade werden beispielsweise mit reinen Polymerpulvern, beispielsweise PA 12-Pulvern, erzielt. Es können beispielsweise auch mit submikroskaligen Partikeln additivierte Polymerpulver eingesetzt werden.

Bevorzugt kann die Laseranordnung einen zusätzlichen Laser aufweisen zur Erzeugung von Laserstrahlung einer Wellenlänge, die nur wenig mit dem Baumaterialpulver wechselwirkt. Dies ermöglicht eine zeitlich parallele Vermessung und Bearbeitung der Bauteilschichten.

Besonders bevorzugt werden thermoplastische Baumaterialpulver mit schmalbandigen Absorptionseigenschaften verwendet. Für die Vermessung der aufgetragenen Pulverschichten, insbesondere von verfestigten Bauteilbereichen, können Laserstrahlen mit Wellenlängen außerhalb der schmalbandigen Absorptionsbereiche genutzt werden. Dies ermöglicht eine hohe Eindringtiefe und einen deutlich reduzierten Informationsverlust durch Absorption.

Gemäß einem bevorzugten Aspekt des Verfahrens ist die bereitgestellte Laseranordnung dazu ausgelegt, Laserstrahlen mit mindestens drei unterschiedlichen Wellenlängen zu erzeugen. Beispielsweise weist die bereitgestellte Laseranordnung mindestens drei Laser unterschiedlicher Wellenlängen auf. Hierdurch ist die Flexibilität und Effizienz des Verfahrens weiter erhöht. Insbesondere können verschiedene Prozessstrategien, beispielsweise eine Steuerung des Temperaturverlaufs in Aufbaurichtung und/oder ein Aufschmelzen unterschiedlicher Bauteilbereiche mit Laserstrahlen unterschiedlicher Wellenlänge und/oder eine in-situ-Vermessung der aufgetragenen Pulverschichten, insbesondere von verfestigten Bauteilbereichen, kombiniert werden.

Gemäß einem bevorzugten Aspekt des Verfahrens zeigt das Bauteilpulver eine Extinktion, die sich für die unterschiedlichen Wellenlängen der mittels der Laseranordnung erzeugbaren Laserstrahlen um mindestens 5 %, insbesondere um mindestens 10 %, insbesondere um mindestens 15 %, insbesondere um mindestens 20 %, unterscheidet. Die Extinktion für die unterschiedlichen Wellenlängen der Laserstrahlen kann sich insbesondere zwischen 5 % und 20 % unterscheiden. Die Extinktion (engl. absorbance) hat sich als besonders geeignetes Maß für das Absorptionsverhalten des Baumaterialpulvers erwiesen. Die Extinktion wird insbesondere nach dem Prinzip der Diffuse-Reflexions-Spektroskopie (DR-Spektroskopie) gemessen. Geeignete Versuchsaufbauten zur Messung der Extinktion sind beispielsweise in den Fachartikeln "'Praying Mantis' diffuse reflectance accessory for UV-Vis-NIR spectroscopy" von R. Hogue (Fresenius' Journal of Analytical Chemistry (1991) 339:68-69) und "Quantitative diffuse reflectance and transmittance spectroscopy of loosely packed powders" von A. Mandelis et al. (Spectrochimica Acta, Vol. 47A, No. 7, pp. 943-971, 1991) beschrieben. Der Unterschied in der Extinktion führt zu Unterschieden in der Eindringtiefe, die besonders effektiv genutzt werden können. Insbesondere sind die Unterschiede in der Extinktion derart, dass das Baumaterialpulver mit Hilfe der mindestens zwei Laser trotz des unterschiedlichen Absorptionsverhaltens gut verarbeitet, insbesondere aufgeschmolzen, werden kann.

Gemäß einem bevorzugten Aspekt des Verfahrens beträgt die Extinktion des Baumaterialpulvers für mindestens zwei der unterschiedlichen Wellenlängen der mittels der Laseranordnung erzeugbaren Laserstrahlen mindestens 0,01, insbesondere mindestens 0,02, insbesondere mindestens 0,05. Die Extinktion des Baumaterialpulvers für mindestens zwei der unterschiedlichen Wellenlängen kann insbesondere zwischen 0,02 und 0,5, insbesondere zwischen 0,05 und 0,25 liegen. Dies gewährleistet eine ausreichende Absorption für das Bearbeiten, insbesondere Aufschmelzen, des Baumaterialpulvers mit Hilfe der mindestens zwei Laser. Die Extinktion wird bevorzugt im sichtbaren und/oder nahinfraroten Wellenlängenbereich erzielt. Bevorzugt wird die Extinktion für alle Wellenlängen der Laseranordnung erzielt. Es ist auch möglich, dass einzelne der mittels der Laseranordnung erzeugbaren Laserstrahlen eine geringere Extinktion aufweisen, insbesondere Laserstrahlen, die zur in-situ-Vermessung aufgetragener Pulverschichten, insbesondere verfestigter Bauteilbereiche, genutzt werden. Für Laserstrahlen, die zur Vermessung genutzt werden, weist das Baumaterialpulver bevorzugt eine Extinktion von weniger als 0,01 auf.

Besonders bevorzugt beträgt Extinktion des Baumaterialpulvers für mindestens zwei der unterschiedlichen Wellenlängen der Laseranordnung mindestens 0,01, insbesondere mindestens 0,02, insbesondere mindestens 0,05, und unterscheidet sich für die Wellenlängen um mindestens 5 %, insbesondere um mindestens 10 %, insbesondere um mindestens 15 %.

Gemäß einem bevorzugten Aspekt des Verfahrens ist das bereitgestellte Baumaterialpulver Polymerpulver, das mit submikroskaligen Partikeln, insbesondere mit Nanopartikeln, additiviert ist zur Erhöhung der Absorption von Laserstrahlen mindestens einer der Wellenlängen. Das Polymerpulver kann mit den submikroskaligen Partikeln insbesondere oberflächenfunktionalisiert sein. Derartige Pulver haben sich als besonders geeignet für die additive Fertigung erwiesen. Insbesondere ermöglichen derartige Pulver ein gutes Absorptionsverhalten im sichtbaren und/oder nahinfraroten Wellenlängenbereich. Abhängig von Material und Größe der submikroskaligen Partikel bilden sich insbesondere schmalbandige Absorptionsbereiche aus. Das Baumaterialpulver weist eine ausreichend hohe Absorption für Laserstrahlen im sichtbaren und/oder nahinfraroten Wellenlängenbereich auf, die bei reinen Polymerpulvern regelmäßig nicht gegeben ist. Die schmalbandige Absorption begünstigt in besonderer Weise das unterschiedliche Absorptionsverhalten bei verschiedenen Wellenlängen.

Die Bereitstellung des Baumaterialpulvers kann die Herstellung des Baumaterialpulvers, insbesondere die Additivierung des Polymerpulvers mit den submikroskaligen Partikeln, umfassen. Derartige Pulver können beispielsweise nach dem Verfahren hergestellt werden, das in WO 2012/080458 A1 beschrieben ist.

Das Polymerpulver kann insbesondere mikroskalige Pulverpartikel umfassen. Mikroskalige Pulverpartikel weisen insbesondere eine Partikelgröße zwischen 1 µm und 1000 µm auf.

Das Polymerpulver kann beliebige thermoplastische Polymere aufweisen oder daraus bestehen, beispielsweise teilkristalline Thermoplaste und/oder thermoplastische Elastomere (TPE). Beispielhafte Polymere sind Polyamid (PA), insbesondere Polyamid 12, Polypropylen (PP), thermoplastische Polyamid-Elastomere (TPA) und/oder thermoplastisches Polyurethan (TPU).

Die submikroskaligen Pulver können insbesondere lasergenerierte Partikel sein. Die submikroskaligen Partikel weisen insbesondere ein Metall, Metalloxid, Metallsulfid und/oder eine metallische Keramik auf, bestehen bevorzugt hieraus. Besonders geeignete submikroskalige Partikel sind beispielsweise aus Kupfersulfid (CuS) und/oder Lanthanhexaborid (LaB₆). Beispielhafte Metallpartikel sind insbesondere Goldpartikel und/oder Silberpartikel, insbesondere in Form von Nanorods. Als besonders geeignetes Baumaterialpulver haben sich PA, insbesondere PA 12, und/oder TPU mit einer Oberflächenfunktionalisierung mit Kupfersulfid-Partikeln und/oder Lanthanhexaborid-Partikeln erwiesen.

Die submikroskaligen Partikel weisen eine Partikelgröße von weniger als 1 µm auf. Die submikroskaligen Partikel können insbesondere Nanopartikel sein, beispielsweise mit einer Partikelgröße zwischen 1 nm und 100 nm, bevorzugt zwischen 5 nm und 50 nm. Die Partikelgröße kann insbesondere abhängig von dem Material der submikroskaligen Partikel gewählt werden. Es hat sich herausgestellt, dass das Absorptionsverhalten der funktionalisierten Polymerpulver abhängig von der Partikelgröße und/oder dem Material der submikroskaligen Partikel eingestellt werden kann. Dies ermöglicht es, das Baumaterialpulver an den jeweiligen Anwendungsfall flexibel anzupassen. Die Vergrößerung der submikroskaligen Partikel kann der schmalbandige Absorptionsbereich zu größeren Wellenlängen verschoben werden. Beispielsweise führt eine Vergrößerung um 5,5 nm bei Kupfersulfid-Partikeln zu einer Verschiebung des Absorptionsbereichs um etwa 200 nm. Für Wellenlängen im infraroten Wellenlängenbereich kann die Partikelgröße von Kupfersulfidpartikeln beispielsweise zwischen 5 nm und 50 nm gewählt werden, im nahinfraroten Wellenlängenbereich (insbesondere für Wellenlängen zwischen etwa 800 nm und 1.100 nm) bevorzugt zwischen 5 nm und 10 nm. Lanthanhexaborid-Partikel haben sich beispielsweise als weniger sensitiv hinsichtlich der Partikelgröße und des daraus resultierenden Absorptionsbereichs erwiesen. Beispielsweise können Lanthanhexaborid-Partikel für eine Absorption im nahinfraroten Wellenlängenbereich mit Partikelgrößen zwischen 5 nm und 50 nm in besonders vorteilhafter Weise eingesetzt werden.

Die submikroskaligen Partikel können in dem Baumaterialpulver einen Anteil zwischen 0,01 Vol.-% und 5 Vol.-%, insbesondere zwischen 0,01 Vol.-% und 2,5 Vol.-%, insbesondere zwischen 0,01 Vol.-% und 1 Vol.-%, insbesondere zwischen 0,01 Vol.-% und 0,5 Vol.-%, haben.

Gemäß einem bevorzugten Aspekt des Verfahrens weisen die submikroskaligen Partikel organische Liganden, insbesondere Citrat-Liganden, auf. Es hat sich herausgestellt, dass organische Liganden einen stabilisierenden Effekt auf die submikroskaligen Partikel haben. Insbesondere wird vermieden, dass die submikroskaligen Partikel agglomerieren. Der stabilisierende Effekt tritt vorteilhafterweise schon bei kleinen Zugabemengen auf. Bevorzugt kann nach der Erstellung der submikroskaligen Partikel, beispielsweise durch Lasergenerierung, eine geringe Menge, insbesondere im Mikromolbereich, der organischen Verbindung hinzugegeben werden. Vorteilhafter Weise hat dies keinen, zumindest kaum einen, Einfluss auf die Trägerung der submikroskaligen Partikel an dem Polymerpulver.

Gemäß einem bevorzugten Aspekt des Verfahrens liegt mindestens eine der Wellenlängen, insbesondere die mindestens zwei unterschiedlichen Wellenlängen, bevorzugt aller Wellenlängen, der Laseranordnung im sichtbaren und/oder nahinfraroten Wellenlängenbereich. Laserstrahlen mit Wellenlängen im sichtbaren und/oder nahinfraroten Wellenlängenbereich, insbesondere zwischen 380 nm und 3.000 nm, bevorzugt zwischen 380 nm und 1.200 nm, haben sich als besonders geeignet für die Verarbeitung von thermoplastischen Baumaterialpulver erwiesen. Insbesondere sind die Möglichkeiten zur zeitlichen und räumlichen Prozesskontrolle verbessert, beispielsweise um lokale Eigenschaften des zu fertigenden Bauteils anzupassen. Laser, die in diesem Wellenlängenbereich arbeiten, ermöglichen insbesondere - im Gegensatz zu üblicherweise verwendeten Kohlenstoffdioxid-Lasern - eine flexible Anpassung der Laserstrahlgeometrie, beispielsweise durch ein diffraktives optisches Element (DOE) und/oder ein Digital Micromirror Device (DMD). Insbesondere können flächige statt lineare Belichtungsstrategien verwendet werden. Beispielsweise kann mindestens einer der Laser der Laseranordnung zur, vorzugsweise lokalen, Wärmeeinbringung und/oder Steuerung des Temperaturverlaufs, insbesondere des Abkühlverhaltens, eingesetzt werden. Dies ermöglicht insbesondere, Infrarotstrahler zu ersetzen, die typischerweise zum Heizen eingesetzt werden und in einem breitbandigen Spektralbereich ungerichtet ausstrahlen.

Weitere Vorteile der Verwendung von Laserstrahlen mit Wellenlängen im sichtbaren und/oder nahinfraroten Bereichen sind deren hohe Energieeffizienz, deren hoher Wirkungsgrad sowie die Möglichkeit verbesserter Strahlführung. Bevorzugt können Diodenlaser eingesetzt werden. Diodenlaser sind insbesondere platzsparend und kompakt.

Als besonders geeignet zur Bearbeitung mit Lasern im sichtbaren und/oder nahinfraroten Wellenlängenbereich haben sich Baumaterialpulver aus mit submikroskaligen Pulverpartikeln additivierten Polymerpulvern erwiesen.

Im Vergleich zu reinen Polymerpulvern, die insbesondere im sichtbaren und nahinfraroten Wellenlängenbereich schlecht absorbieren, ermöglichen diese Pulver die gezielte Einstellung eines, insbesondere schmalbandigen, Absorptionsverhaltens im sichtbaren und/oder nahinfraroten Wellenlängenbereich.

Die erfindungsgemäße Vorrichtung für die additive Fertigung eines Bauteils weist ein Pulverreservoir für ein thermoplastisches Baumaterialpulver, eine Pulverauftragseinheit zum Auftragen von Pulverschichten des Baumaterialpulvers, eine Laseranordnung zur Erzeugung von Laserstrahlen mit mindestens zwei unterschiedlichen Wellenlängen und eine Steuereinheit zum Ansteuern der Laseranordnung auf. Die Steuereinheit ist dazu ausgelegt, durch Ansteuern der Laseranordnung das Baumaterialpulver in zu verfestigenden Bereichen der Pulverschichten aufzuschmelzen, wobei Laserstrahlen unterschiedlicher Wellenlänge selektiv auf die Pulverschichten eingestrahlt werden, um mit dem Baumaterialpulver mit unterschiedlicher Eindringtiefe wechselzuwirken. Die Vorrichtung ermöglicht eine flexible und effiziente additive Fertigung. Die Vorteile der Vorrichtung und bevorzugte Ausgestaltungen hiervon entsprechen den oben in Bezug auf das Verfahrenen Beschriebenen.

Beispielsweise weist die Laseranordnung mindestens zwei Laser auf, wobei sich die Wellenlängen der jeweiligen Laserstrahlen der mindestens zwei Laser unterscheiden. Alternativ oder zusätzlich kann die Laseranordnung mindestens eine Laserstrahlquelle zur Erzeugung von Laserstrahlen mit veränderbarer Wellenlänge aufweisen. Geeignete Laserstrahlquellen weisen beispielsweise einen Optical Parametric Amplifier (kurz: OPA) auf, mit dem die Wellenlänge der Laserstrahlung eines Lasers geändert werden kann.

Die Steuereinheit ist insbesondere zum Ansteuern der gesamten Vorrichtung, beispielsweise der Laseranordnung und der Pulverauftragseinheit, ausgebildet. Die Steuereinheit ist bevorzugt zum Durchführen der oben diskutierten Verfahrensschritte ausgebildet.

Die Pulverauftragseinheit kann insbesondere zum Transfer des Baumaterialpulvers aus dem Pulverreservoir in einen Bauraum, beispielsweise auf eine Bauplattform, ausgebildet sein. In dem Bauraum kann das Baumaterialpulver schichtweise aufgetragen werden. Die Pulverauftragseinheit kann beispielsweise mechanisch ausgebildet sein, insbesondere eine Rakel oder einen Wischer aufweisen. Die Pulverauftragseinheit kann auch für den elektrofotographischen Pulverauftrag ausgebildet sein.

Die Laseranordnung kann eine oder mehrere Einstrahloptiken zum gezielten Einstrahlen der Laserstrahlen aufweisen. Beispielsweise kann die Laseranordnung eine gemeinsame Einstrahloptik aufweisen, die selektiv Laserstrahlen unterschiedlicher Wellenlänge, beispielsweise Laserstrahlen eines von mindestens zwei Lasern, einstrahlt. Es ist auch möglich, eine Einstrahloptik je Wellenlänge, insbesondere je Laser, vorzusehen. Dies ist ermöglicht insbesondere ein zeitlich paralleles Einstrahlen von Laserstrahlen unterschiedlicher Wellenlänge, insbesondere unterschiedlicher Laser. Die Einstrahloptik kann beispielsweise einen Galvanometer-Scanner aufweisen. Bevorzugt ermöglicht die mindestens eine Einstrahloptik eine individuale Anpassung der Laserstrahlgeometrien der Laserstrahlen unterschiedlicher Wellenlängen, insbesondere der Laserstrahlen eines oder mehrerer Laser der Laseranordnung.

Die Laseranordnung kann zusätzlich oder alternativ ein Achssystem zur Verlagerung einer oder mehrere Laserstrahlquellen, insbesondere mindestens zweier Laser unterschiedlicher Wellenlängen, aufweisen.

Besonders bevorzugt kann die mindestens eine Einstrahloptik ein diffraktives optisches Element (DOE) aufweisen und/oder für das Digital Light Processing (DLP) ausgelegt sein, beispielsweise ein Digital Micromirror Device (DMD) aufweisen. Die Laseranordnung ermöglicht flächige Belichtungsstrategien und eine zeitliche sowie räumliche Prozesskontrolle. Insbesondere kann einer der Laser anstelle eines Infrarotstrahlers eingesetzt werden zur, insbesondere lokalen, Wärmeeinbringung und/oder gezielten Steuerung des Abkühlverhaltens.

Gemäß einem bevorzugten Aspekt der Vorrichtung ist die Steuereinheit dazu ausgebildet, Baumaterialpulver in unterschiedlichen Bauteilbereichen mit Laserstrahlen unterschiedlicher Wellenlänge, insbesondere mit Laserstrahlen verschiedener der mindestens zwei Laser der Laseranordnung, aufzuschmelzen zur Erzeugung von Bauteilbereichen mit unterschiedlicher Schichtdicke der jeweiligen Bauteilschichten. Die additive Fertigung ist besonders flexibel, effizient und wirtschaftlich.

Gemäß einem bevorzugten Aspekt der Vorrichtung ist die Steuereinheit dazu ausgebildet, einen Temperaturverlauf in Aufbaurichtung mit Hilfe von Laserstrahlen mindestens einer der unterschiedlichen Wellenlängen zu steuern. Insbesondere kann die Bauteildichte lokal angepasst werden, beispielsweise um Stützstrukturen höherer Dichte in dem Bauteil zu erzeugen. Als Stützstrukturen können beispielsweise Stützpfeiler in Aufbaurichtung erzeugt werden. Die Stützpfeiler werden insbesondere innerhalb der aufgeschmolzenen Bereiche zur Verstärkung der mechanischen Eigenschaften erzeugt.

Gemäß einem bevorzugten Aspekt der Vorrichtung liegt mindestens eine der Wellenlängen, insbesondere die mindestens zwei unterschiedlichen Wellenlängen, der Laserstrahlen der Laseranordnung im sichtbaren und/oder nahinfraroten Wellenlängenbereich. Laserstrahlen in diesem Wellenlängenbereich sind besonders geeignet für die räumliche und/oder zeitliche Prozesskontrolle, beispielsweise über ein diffraktives optisches Element (DOE) und/oder ein Digital Micromirror Device (DMD). Die Vorrichtung ist besonders geeignet zur Verarbeitung von thermoplastischen Baumaterialpulver aus mit submikroskaligen Partikeln, insbesondere Metallpartikeln, additiviertem Polymerpulver.

Gemäß einem bevorzugten Aspekt der Vorrichtung ist die bereitgestellte Laseranordnung dazu ausgebildet, Laserstrahlen mit mindestens drei unterschiedlichen Wellenlängen zu erzeugen. Beispielsweise weist die Laseranordnung mindestens drei Laser unterschiedlicher Wellenlänge auf. Die Vorrichtung ermöglicht eine besonders flexible und effiziente Fertigung. Unterschiedliche Fertigungsstrategien können kombiniert werden.

Gemäß einem bevorzugten Aspekt der Vorrichtung weist diese einen Detektor zur Detektion von Sekundärstrahlung auf, die auf auf die Pulverschichten eingestrahlte Laserstrahlen mindestens einer der Wellenlängen der Laseranordnung zurückgeht, zur Vermessung der aufgetragenen Pulverschichten, insbesondere von verfestigten Bereichen der Bauteilschichten. Bevorzugt wird Sekundärstrahlung verwendet, die auf Laserstrahlen zurückgeht, die nur gering mit dem Baumaterialpulver wechselwirken, insbesondere Laserstrahlen derjenigen Wellenlänge der Laseranordnung, die am geringsten von dem Baumaterialpulver absorbiert wird. Die Vorrichtung eignet sich insbesondere zur in-situ-Analyse und/oder Qualitätskontrolle des zu erzeugenden Bauteils. Fertigungsfehler und Ausschuss sind vermieden. Fertigungsfehler können insbesondere frühzeitig erkannt und bevorzugt behoben werden.

Der Detektor kann insbesondere zur Vermessung mittels der optischen Kohärenz-Tomographie (OCT) ausgelegt sein. Beispielsweise kann der Detektor ein Interferometer aufweisen, um die Sekundärstrahlung mit einer Referenzstrahlung zu interferieren. Der Detektor kann als Referenzstrahlung insbesondere Laserstrahlen der Wellenlänge verwenden, die für die Vermessung auf die Pulverschichten eingestrahlt wird.

Weitere Merkmale, Vorteile und Einzelheiten der Erfindung ergeben sich aus der nachfolgenden Beschreibung von Ausführungsbeispielen anhand der Zeichnungen. Es zeigen:
- Fig. 1: eine schematische Darstellung einer Vorrichtung für die additive Fertigung eines Bauteils mit einer Laseranordnung zur Erzeugung von Laserstrahlen unterschiedlicher Wellenlänge,
- Fig. 2: schematisch die Einstrahlung von Laserstrahlung eines ersten Lasers der Laseranordnung der Vorrichtung gemäß Fig. 1 während der additiven Fertigung,
- Fig. 3: schematisch die Einstrahlung von Laserstrahlung eines zweiten Lasers der Laseranordnung der Vorrichtung gemäß Fig. 1 während der additiven Fertigung,
- Fig. 4: die Extinktion für ein beispielhaftes Baumaterialpulver aufgetragen über die Wellenlänge,
- Fig. 5: die Extinktion für ein weiteres beispielhaftes Baumaterialpulver aufgetragen über die Wellenlänge und
- Fig. 6: schematisch eine weitere Ausführungsform einer Vorrichtung für die additive Fertigung.

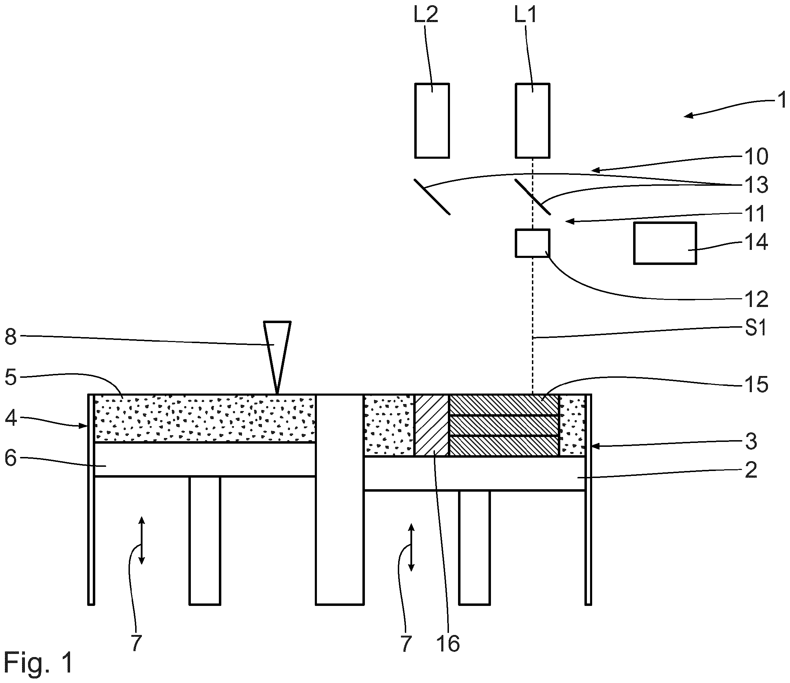

Entsprechende Teile sind in den Fig. 1 bis 6 mit denselben Bezugszeichen versehen. Auch Einzelheiten der im Folgenden näher erläuterten Ausführungsbeispiele können für sich genommen eine Erfindung darstellen oder Teil eines Erfindungsgegenstandes sein.

In Fig. 1 ist eine Vorrichtung 1 zur additiven Fertigung eines Bauteils gezeigt. Die Vorrichtung 1 ist für die schichtweise Fertigung des Bauteils durch pulverbettbasiertes Schmelzen mittels Laserstrahl an einem polymeren Werkstoff (PBF-LB/P) ausgelegt.

Die Vorrichtung umfasst eine Bauplattform 2 in einem Bauraum 3 und ein Pulverreservoir 4 für ein Baumaterialpulver 5. Die Bauplattform 2 und eine Reservoirplattform 6 des Pulverreservoirs 4 sind entlang einer Hubrichtung 7, die parallel zu einer Aufbaurichtung des zu erzeugenden Bauteils ist, verfahrbar. Mit Hilfe einer Pulverauftragseinheit 8 kann das Baumaterialpulver 5 schichtweise in dem Bauraum 3 zur Erzeugung einer Pulverschicht des Baumaterialpulvers 5 aufgetragen werden. Vorliegend ist die Pulverauftragseinheit 8 als Wischer oder Rakel ausgebildet, der senkrecht zu der Hubrichtung 7 oberhalb des Pulverreservoirs 4 und des Bauraums 3 verfahrbar ist. Durch die Hubhöhe der Plattformen 2, 6 kann für die aufzutragende Pulverschicht die Schichtdicke eingestellt werden.

Die Vorrichtung 1 weist eine Laseranordnung 10 mit zwei Lasern, vorliegend einem ersten Laser L1 und einem zweiten Laser L2, zur Erzeugung von Laserstrahlen S1, S2 auf. Laserstrahlen S1 des ersten Lasers L1 und/oder Laserstrahlen S2 des zweiten Lasers L2 können über eine gemeinsame Einstrahloptik 11 selektiv auf die aufgetragenen Pulverschichten im Bauraum 3 eingestrahlt werden. Hierzu weist die Laseranordnung 10 eine gemeinsame Einstrahloptik 11 mit einem Galvanometer-Scanner 12 und Umlenkspiegeln 13 auf. In Fig. 1 ist die Situation beispielshaft gezeigt, in der ein Laserstrahl S1 des ersten Lasers L1 mit Hilfe des Galvanometer-Scanners 12 auf zu verfestigende Bereiche der Pulverschicht eingestrahlt wird.

Die Vorrichtung 1 weist eine Steuereinheit 14 zum Ansteuern der Vorrichtung 1 während der additiven Fertigung des Bauteils auf. Die Steuereinheit 14 ist insbesondere dazu ausgebildet, die Laseranordnung 10 anzusteuern, um zu verfestigende Bereich der Pulverschichten des Baumaterialpulvers mit Hilfe der Laserstrahlen S1, S2 aufzuschmelzen, wobei Laserstrahlen S1, S2 der zwei Laser L1, L2 selektiv auf die Pulverschichten eingestrahlt werden.

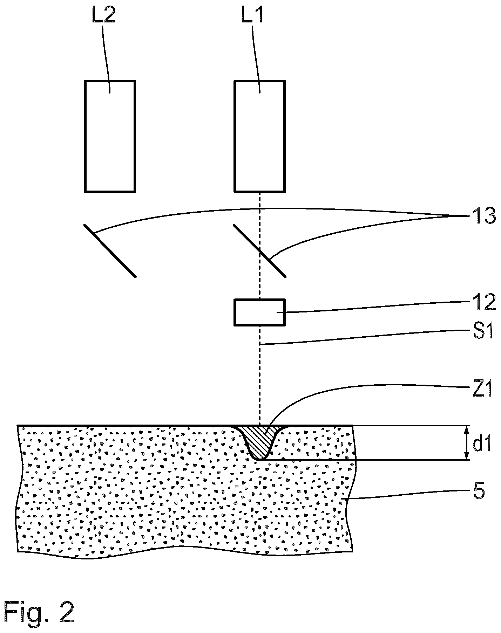

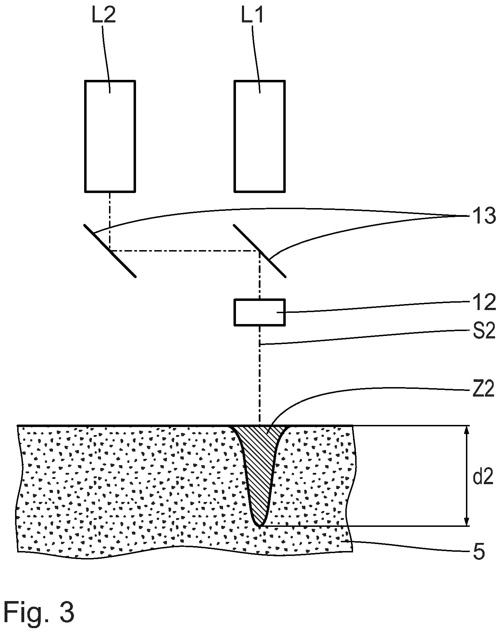

Die Wellenlängen λ der Laserstrahlen S1, S2 der zwei Laser L1, L2 unterscheiden sich. Das Baumaterialpulver 5 zeigt für die unterschiedlichen Wellenlängen λ der Laserstrahlen S 1, S2 der Laser L1, L2 ein unterschiedliches Absorptionsverhalten. Laserstrahlen S 1 des ersten Lasers L1 wird von dem Baumaterialpulver 5 stärker absorbiert als Laserstrahlen S2 des zweiten Lasers L2. Dies resultiert in unterschiedlichen Eindringtiefen d1, d2 für die jeweilige Laserstrahlen S 1, S2 der Laser L1, L2. Dies ermöglicht eine Wechselwirkung der Laserstrahlen S 1, S2 mit dem Baumaterialpulver 5 mit unterschiedlicher Eindringtiefe d1, d2, wie dies in den Fig. 2 und 3 schematisch dargestellt ist.

Die Wechselwirkung der Laserstrahlen S 1, S2 mit unterschiedlicher Eindringtiefe d1, d2 ermöglicht die Verwendung unterschiedlicher Prozessstrategien zu flexiblen additiven Fertigung. Weniger stark absorbierte Laserstrahlung kann beispielsweise zum Steuern des Temperaturverlaufs in Aufbaurichtung genutzt werden, beispielsweise um die Bauteildichte lokal anzupassen. Es ist auch möglich, unterschiedliche Bauteilbereiche mit verschiedenen Lasern L1, L2 aufzuschmelzen, zur Erzeugung von Bauteilschichten unterschiedlicher Schichtdicke.

In Fig. 2 ist die Situation gezeigt, in der ein Laserstrahl S 1 des ersten Lasers L1 auf Pulverschichten des Baumaterialpulvers 5 eingestrahlt werden. Aufgrund der hohen Absorption ist die Eindringtiefe d1 der des Laserstrahls S 1 gering. Es entsteht eine Schmelzzone Z1 mit geringer Eindringtiefe d1. Laserstrahlen S 1 des ersten Lasers L1 können insbesondere zur Erzeugung von Bauteilbereichen mit hoher Auflösung genutzt werden.

In Fig. 3 wird ein Laserstrahl S2 des zweiten Lasers L2 auf Pulverschichten des Baumaterialpulvers 5 eingestrahlt. Entsprechend der höheren Eindringtiefe d2 entsteht eine Schmelzzone Z2, die zum Aufschmelzen des Baumaterialpulvers 5 mit höherer Dicke und damit insbesondere zum Erzeugen von Bauteilschichten größerer Schichtdicke geeignet ist.

Bei der additiven Fertigung werden mehrere Bauteilschichten 15, 16 (vgl. Fig. 1) erzeugt, wobei jeweils eine Pulverschicht des Baumaterialpulvers aufgetragen und in zu verfestigenden Bereichen mit Hilfe der Laserstrahlen S 1, S2 der Laseranordnung 10 aufgeschmolzen wird. Bei dem in Fig. 1 gezeigten Ausführungsbeispiel werden die Laser L1, L2 dazu verwendet, in unterschiedlichen Bauteilbereichen das Baumaterialpulver 5 aufzuschmelzen zur Erzeugung von Bauteilschichten 15, 16 mit unterschiedlicher Schichtdicke. Dies ermöglicht es, Bauteilbereiche, bei denen eine geringere Auflösung, insbesondere in Aufbaurichtung, ausreicht, mit höherer Schichtdicke zu fertigen und somit die Prozesszeit zu verkürzen.

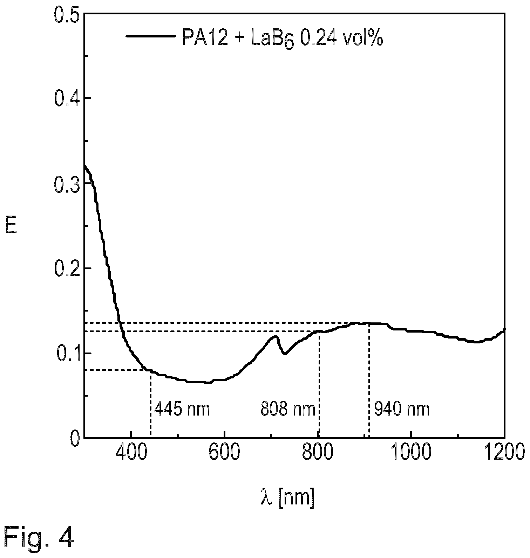

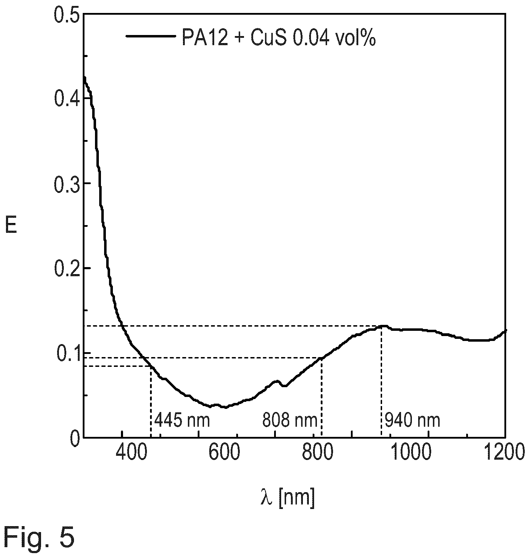

Als besonders geeignete Baumaterialpulver 5 haben sich mit submikroskaligen Partikeln, insbesondere Nanopartikeln, additivierte Polymerpulver erwiesen. Besonders geeignete submikroskalige Partikel können ein Metall, Metalloxid, Metallsulfid, insbesondere Kupfersulfid, und/oder eine metallische Keramik, insbesondere Lanthanhexaborid, umfassen, insbesondere daraus bestehen. Mit Bezug auf die Fig. 4 und 5 werden zwei beispielhafte, besonders bevorzugte Baumaterialpulver 5 hinsichtlich deren Absorptionsverhalten erläutert.

In Fig. 4 ist die Extinktion E, die sich als besonders geeignete Quantifizierung des Absorptionsverhaltens erwiesen hat, über die Wellenlängen λ für ein beispielhaftes Baumaterialpulver 5 gezeigt. Das gezeigte Baumaterialpulver 5 ist ein mit Lanthanhexaborid-Nanopartikeln additiviertes Polyamid-12-Pulver. Der Anteil der Lanthanhexaborid-Partikel in dem Baumaterialpulver 5 beträgt 0,24 Vol.-%. Durch die Additivierung des Polymerpulvers entstehen schmalbandige Absorptionsbereiche in sichtbaren und nahinfraroten Wellenlängenbereichen. Für unterschiedliche Wellenlängen λ unterscheidet sich die Extinktion E und damit das Absorptionsverhalten. In Fig. 4 sind beispielhafte Wellenlängen λ bei 445 nm, 808 nm bzw. 940 nm eingezeichnet, die sich für die Verarbeitung von Polymerpulvern mit entsprechenden Lasern als besonders geeignet erwiesen haben. Die Extinktion E für das beispielhafte Baumaterialpulver 5 unterscheidet sich in diesen signifikant, jeweils um mehr als 10%.

In Fig. 5 ist die Extinktion E über die Wellenlänge λ für ein weiteres beispielhaftes Baumaterialpulver 5 gezeigt. Bei dem in Fig. 5 gezeigten Baumaterialpulver handelt es sich um ein Polyamid-12-Pulver, das mit Kupfersulfid-Nanopartikeln mit einem Anteil von 0,04 Vol.-% additiviert ist. Wiederum entstehen schmalbandige Absorptionsbereiche im sichtbaren und nahinfraroten Wellenlängenbereich. Für besonders geeignete Wellenlängen λ unterscheidet sich die Extinktion E relevant, mindestens um 10%.

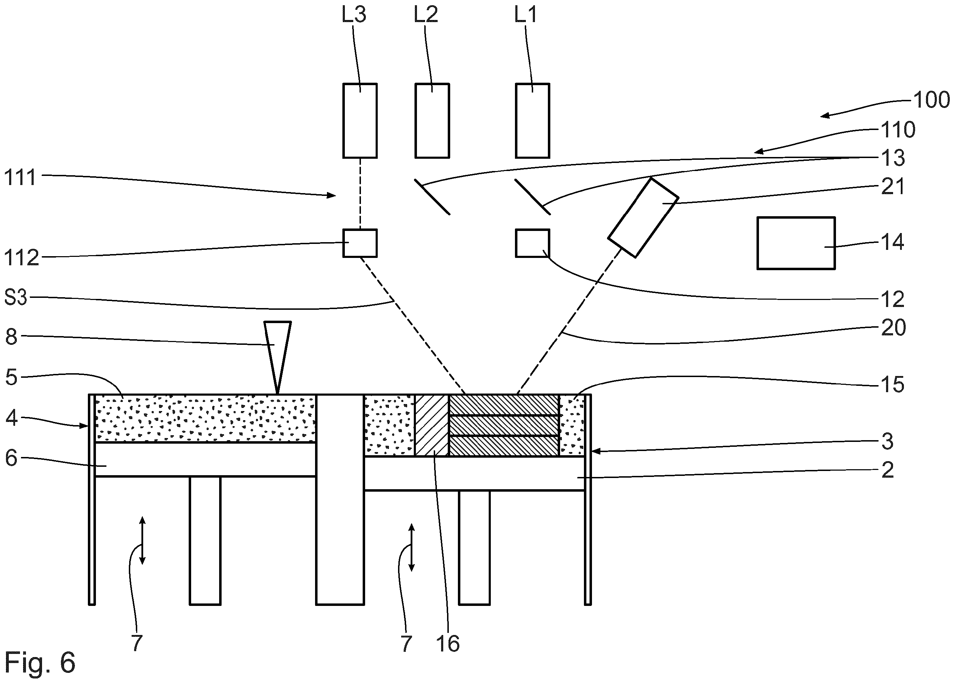

In Fig. 6 ist schematisch ein weiteres Ausführungsbeispiel einer Vorrichtung 100 für die additive Fertigung gezeigt. Die Vorrichtung 100 unterscheidet sich von der Vorrichtung 1, die in Bezug auf die Fig. 1 erläutert wurde, nur durch die Ausgestaltung der Laseranordnung 110. Die Laseranordnung 110 weist einen dritten Laser L3 zur Erzeugung von Laserstrahlen S3 auf, deren Wellenlänge λ sich wiederum von den Wellenlängen λ der Laserstrahlen S1, S2 der Laser L1, L2 unterscheidet. Die Wellenlänge λ der Laserstrahlen S3 des dritten Lasers L3 ist derart gewählt, dass diese nur schwach mit dem Baumaterialpulver 5 wechselwirkt, also eine hohe Eindringtiefe hat. Die Laserstrahlen S3 werden zur Vermessung von aufgetragenen Pulverschichten, insbesondere des aufgetragenen Pulvers, der Schmelze und/oder bereits verfestigter Bauteilbereiche, genutzt. Bei dem in Fig. 6 dargestellten Ausführungsbeispiel wird ein Laserstrahl S3 über eine separate Einstrahloptik 111 mit einer Umlenkeinrichtung 112 auf die Pulverschichten, insbesondere auf bereits erstellte Bauteilschichten 15, 16, eingestrahlt. Eine auf die eingestrahlte Laserstrahlung S3 zurückgehende Sekundärstrahlung 20 wird mit Hilfe eines Detektors 21 erfasst. Der Detektor 21 kann insbesondere ein Interferenzmuster der Sekundärstrahlung 20 mit einer Referenzstrahlung, beispielsweise den Laserstrahlen S3, erfassen. Die Laserstrahlen S3 können beispielsweise mittels eines Strahlteilers (nicht gezeigt) aufgeteilt werden und teils als auf die Bauteilschichten eingestrahlt und teils als Referenzstrahlung verwendet werden. Dies ermöglicht den Einsatz von in-situ-Analysemethoden, beispielsweise mittels der optischen Kohärenz-Tomografie, zur Qualitätskontrolle. Beispielsweise können Poren und/oder Schichtanbindungsfehler während des Prozesses detektiert und gegebenenfalls korrigiert werden, beispielsweise indem die jeweiligen Pulverschichten ein oder mehrmals nachgeschmolzen werden.

Als besonders geeignet für diese Anwendung haben wiederum Polymerpulver erwiesen, die mit submikroskaligen Partikeln, insbesondere Nanopartikeln, additiviert wurden. Die schmalbandigen Absorptionsbereiche ermöglichen den Einsatz von Laserstrahlen geringer Absorption. Im Gegensatz dazu haben breitbandig absorptionserhöhende Additive (beispielsweise Ruß) den Nachteil einer geringen Transmission für relevante Wellenlängen für die in-situ-Analyse. Schmalbandige Absorptionsbereiche ermöglichen eine Bearbeitung im sichtbaren und/oder nahinfraroten Wellenlängenbereich und gleichzeitig eine Vermessung mit Hilfe geeigneter Wellenlängen. Insbesondere können schwach absorbierende Wellenlängen zur Vermessung in tieferliegenden Pulver-, Schmelze- und/oder Bauteilschichten genutzt werden. Beispielsweise kann die Vermessung über mindestens drei, insbesondere mindestens fünf, insbesondere mindestens zehn, Schichtdicken erfolgen.

In anderen, nicht figürlich gezeigten Ausführungsbeispielen, weist die Laseranordnung mindestens eine Laserstrahlquelle zur Erzeugung von Laserstrahlen mit veränderbarer Wellenlänge. Beispielsweise weist die Laseranordnung einen Optical Parametric Amplifier (OPA) zur Änderung der Wellenlänge der Laserstrahlung eines Lasers auf. Beispielsweise kann die Laserstrahlung des Lasers selektiv durch einen OPA geleitet werden zur Änderung der Wellenlänge der Laserstrahlung. Es ist insbesondere möglich den Laserstrahl eines Lasers in zwei oder mehr Teilstrahlen zu splitten und mindestens einen der Teilstrahlen durch einen OPA zu leiten.

## Patentansprüche

1. Verfahren zur additiven Fertigung eines Bauteils, mit den Schritten
- Bereitstellen einer Laseranordnung (10; 110) zur Erzeugung von Laserstrahlen (S1, S2, S3) mit mindestens zwei unterschiedlichen Wellenlängen (λ),
- Bereitstellen eines thermoplastischen Baumaterialpulvers (5), das für die unterschiedlichen Wellenlängen (λ) der Laserstrahlen (S1, S2, S3) ein unterschiedliches Absorptionsverhalten zeigt, und
- Erzeugen mehrerer Bauteilschichten (15, 16), wobei jeweils
- eine Pulverschicht des Baumaterialpulvers (5) aufgetragen wird und
-- das Baumaterialpulver (5) in zu verfestigenden Bereichen der Pulverschicht mithilfe der Laserstrahlen (S1, S2, S3) der Laseranordnung (10; 110) aufgeschmolzen wird, und
wobei Laserstrahlen (S1, S2, S3) unterschiedlicher Wellenlängen (λ) selektiv auf die Pulverschichten eingestrahlt werden, um mit dem Baumaterialpulver (5) mit unterschiedlicher Eindringtiefe (d1, d2) wechselzuwirken.

2. Verfahren nach Anspruch 1, **dadurch gekennzeichnet, dass** Baumaterialpulver (5) in unterschiedlichen Bauteilbereichen mit Laserstrahlen (S1, S2) unterschiedlicher Wellenlänge (λ) aufgeschmolzen wird zur Erzeugung von Bauteilbereichen mit unterschiedlicher Schichtdicke der jeweiligen Bauteilschichten (15, 16).

3. Verfahren nach einem der vorgenannten Ansprüche, **dadurch gekennzeichnet, dass** ein Temperaturverlauf in Aufbaurichtung mithilfe der Laserstrahlen (S1, S2) mindestens einer der unterschiedlichen Wellenlängen (λ) der Laseranordnung (10) gesteuert wird.

4. Verfahren nach einem der vorgenannten Ansprüche, **dadurch gekennzeichnet, dass** Sekundärstrahlung (20), die auf auf die Pulverschichten eingestrahlte Laserstrahlen (S3) mindestens einer der unterschiedlichen Wellenlängen (λ) zurückgeht, detektiert wird zur Vermessung der aufgetragenen Pulverschichten, insbesondere von verfestigten Bereichen der Bauteilschichten (15, 16).

5. Verfahren nach einem der vorgenannten Ansprüche, **dadurch gekennzeichnet, dass** die bereitgestellte Laseranordnung (110) dazu ausgelegt ist, Laserstrahlen (S1, S2, S3) mit mindestens drei unterschiedlichen Wellenlängen (λ) zu erzeugen.

6. Verfahren nach einem der vorgenannten Ansprüche, **dadurch gekennzeichnet, dass** das Bauteilpulver (5) eine Extinktion (E) zeigt, die sich für die unterschiedlichen Wellenlängen (λ) der mittels der Laseranordnung (10, 110) erzeugbaren Laserstrahlen (S1, S2, S3) um mindestens 5 %, insbesondere um mindestens 10 %, unterscheidet.

7. Verfahren nach einem der vorgenannten Ansprüche, insbesondere nach Anspruch 6, **dadurch gekennzeichnet, dass** die Extinktion (E) des Baumaterialpulvers (5) für mindestens zwei der unterschiedlichen Wellenlängen (λ) der mittels der Laseranordnung (10, 110) erzeugbaren Laserstrahlen (S1, S2, S3) mindestens 0,01, insbesondere mindestens 0,02, insbesondere mindestens 0,05, beträgt.

8. Verfahren nach einem der vorgenannten Ansprüche, **dadurch gekennzeichnet, dass** das bereitgestellte Baumaterialpulver (5) ein Polymerpulver ist, das mit submikroskaligen Partikeln, insbesondere Nanopartikeln, additiviert ist zur Erhöhung der Absorption von Laserstrahlen (S1, S2, S3) mindestens einer der Wellenlängen (A).

9. Verfahren nach Anspruch 8, **dadurch gekennzeichnet, dass** die submikroskaligen Partikel organische Liganden, insbesondere Citrat-Liganden, aufweisen.

10. Verfahren nach einem der vorgenannten Ansprüche, **dadurch gekennzeichnet, dass** mindestens eine der Wellenlängen (λ), insbesondere die mindestens zwei unterschiedlichen Wellenlängen (λ), der mit der Laseranordnung (10; 110) erzeugbaren Laserstrahlen (S1, S2, S3) im sichtbaren und/oder nahinfraroten Wellenlängenbereich liegen.

11. Vorrichtung (1; 100) für die additive Fertigung eines Bauteils, aufweisend
- ein Pulverreservoir (4) für ein thermoplastisches Baumaterialpulver (5),
- eine Pulverauftragseinheit (8) zur Auftragen von Pulverschichten des Baumaterialpulvers (5),
- eine Laseranordnung (10; 110) zur Erzeugung von Laserstrahlen (S1, S2, S3) mit mindestens zwei unterschiedlichen Wellenlängen (λ), und
- eine Steuereinheit (14) zum Ansteuern der Laseranordnung (10; 119), um das Baumaterialpulver (5) in zu verfestigenden Bereichen der Pulverschichten aufzuschmelzen, wobei Laserstrahlen (S1, S2, S3) unterschiedlicher Wellenlänge (λ) selektiv auf die Pulverschichten eingestrahlt werden, um mit dem Baumaterialpulver (5) mit unterschiedlicher Eindringtiefe (d1, d2) wechselzuwirken.

12. Vorrichtung (1; 100) nach Anspruch 11, **dadurch gekennzeichnet, dass** die Steuereinheit (14) dazu ausgebildet ist, Baumaterialpulver (5) in unterschiedlichen Bauteilbereichen mit Laserstrahlen (S1, S2) unterschiedlicher Wellenlänge (λ) aufzuschmelzen zur Erzeugung von Bauteilbereichen mit unterschiedlicher Schichtdicke der jeweiligen Bauteilschichten.

13. Vorrichtung (1; 100) nach einem der Ansprüche 11 oder 12, **dadurch gekennzeichnet, dass** die Steuereinheit (14) dazu ausgebildet ist, einen Temperaturverlauf in Aufbaurichtung mithilfe von Laserstrahlen (S1, S2, S3) mindestens einer der unterschiedlichen Wellenlängen (λ) der Laseranordnung (10) zu steuern.

14. Vorrichtung (1; 100) nach einem der Ansprüche 11 bis 13, **dadurch gekennzeichnet, dass** mindestens eine der Wellenlängen (λ), insbesondere die mindestens zwei unterschiedlichen Wellenlängen (λ), der mittels der Laseranordnung (10; 110) erzeugbaren Laserstrahlen (S1, S2, S3) im sichtbaren und/oder nahinfraroten Wellenlängenbereich liegen.

15. Vorrichtung (1; 100) nach einem der Ansprüche 11 bis 14, **dadurch gekennzeichnet, dass** die Laseranordnung (110) dazu ausgebildet ist, Laserstrahlen (S1, S2, S3) mit mindestens drei unterschiedlichen Wellenlängen (λ) zu erzeugen.

16. Vorrichtung (1; 100) nach einem der Ansprüche 11 bis 15, **gekennzeichnet durch** einen Detektor (21) zur Detektion von Sekundärstrahlung (20), die auf auf die Pulverschichten eingestrahlte Laserstrahlen (S3) mindestens einer der Wellenlängen (λ) der Laseranordnung (10) zurückgeht, zur Vermessung der aufgetragenen Pulverschichten, insbesondere von verfestigten Bereichen der Bauteilschichten (15, 16).
